# EUROPÄISCHE PATENTANMELDUNG

(11) **EP 1 775 029 A2**
(43) Veröffentlichungstag der Anmeldung: **18.04.2007**
(21) Anmeldenummer: 06021538.1
(22) Anmeldetag: 13.10.2006
(51) Int. Cl.: B05C 5/02, B05C 11/10, B05B 9/04

(54) **Verfahren und Vorrichtung zum Aufbringen einer fliessfähigen oder pastösen Masse**

(30) Priorität: 14.10.2005 DE 102005049735
(71) Anmelder: SAR Elektronic GmbH, 84130 Dingolfing (DE)
(72) Erfinder: Schirra, Erich, 84160 Frontenhausen (DE); Mazgaj, Jan, 33758 Stukenbrook (DE)
(74) Vertreter: Pausch, Thomas Ernst

(57) **Zusammenfassung**

Die Erfindung betrifft ein Verfahren und eine Vorrichtung zum Aufbringen einer fließfähigen oder pastösen Masse auf ein Werkstück, bei welchem die fließfähige oder pastöse Masse (5) aus einem Materialversorgungsspeicher (1) kommend über eine an eine den Volumenstrom der Masse steuernde Steuereinrichtung (2) gehenden Zuführungskanal (6) an eine Applikationseinrichtung (4) zugeführt wird, mit welcher die Masse auf das Werkstück aufgetragen wird. Es ist ein Rückführungskanal (8) vorgesehen, über den die an die Applikationseinrichtung (4) zugeführte fließfähige oder pastöse Masse (5) an den Materialversorgueigsspeicher (1) dergestalt zurückführbar ist, dass die fließfähige oder pastöse Masse (5) ständig im Fluss gehalten wird. Die Steuereinrichtung (2) besitzt ein in einem Gehäuse gelagertes und motorisch oder hydraulisch um eine Drehachse drehbar angetriebenes Absperrorgan (10), welches annähernd T-förmig ausgebildete bzw. angeordnete Durchlässe (12) aufweist, die in Abhängigkeit der Winkelstellung des Absperrorgans (10) die weite der Querschnittsöffnungen von Zuführungskanal (6) bzw. Rückführungskanal (8) und dadurch den Massenvolumenstrom steuern.

## Beschreibung

Die Erfindung betrifft ein Verfahren und eine Vorrichtung zum Aufbringen einer fließfähigen oder pastösen Masse auf ein Werkstück, bei welchem die fließfähige oder pastöse Masse aus einem Materialversorgungsspeicher kommend über eine an eine den Volumenstrom der Masse steuernde Steuereinrichtung gehenden Zuführungskanal an eine Applikationseinrichtung zugeführt wird, mit welcher die Masse auf das Werkstück aufgetragen wird.

Bei einem bekannten Verfahren dieser Art, das in der industriellen Verarbeitung von Autokarosserieteilen, nämlich beim Verkleben von Karosserieblechen, eingesetzt wird, wird mit Hilfe eines Applikationskopfes ein härtbarer Kleber auf den Rand der Innenfläche eines Karossiereaußenblechs, das mit einem Innenblech verklebt werden soll, aufgetragen. Daran anschließend wird das Innenhlech auf das Karossiexeaußenhlech aufgelegt und der mit dem Kleber besprühte Rand des Außenbleches um das Innenblech gefalzt. Der Aushärtungsvorgang kann sodann beispielsweise durch Erhitzen dieser Anordnung aktiviert werden. Zwischen den Takten des Auftragungsverfahrens wird der Materialfluss der von einem Vorratsbehälter an die Steuervorrichtung transportierten Masse unterbrochen; hierbei kann es zu unerwünschten Viskositatsanderungen der fließfähigen oder pastösen Masse kommen und dadurch zu einer Änderung der tixotropischen Eigenschaften der aufzutragenden Klebermasse. Schwankungen in der Konsistenz des aus dem Applikationskopf austretenden Klebstoffstranges führen zu Qualitätsschwankungen des in einer bestimmten Breite aufgetragenen Klebestreifens und im Ergebnis nach dem Aushärtungsvorgang zu unter Umständen unbefriedigenden Klebeergebnissen an entsprechenden Bereichen.

Der vorliegenden Erfindung liegt daher die Aufgabe zugrunde, ein Verfahren und eine Vorrichtung der eingangs angegebenen Art anzugeben, mit welchem bzw. mit welcher einerseits ein möglichst gleichmäßiger Auftrag der fließfähigen oder pastösen Masse auf die Werkstückoberfläche gewährleistet ist, und dabei auch nach einem Taktwechsel oder nach Wartestellungen eine gleichbleibende Qualität der aufzubringenden fließfähigen oder pastösen Masse gewährleistet werden kann.

Zur Lösung dieser Aufgabe wird gemäß der Erfindung vorgeschlagen, dass die an die Applikationseinrichtung zugeführte fließfähige oder pastöse Masse über einen Rückführungskanal an den Materialversorgungsspeicher dergestalt zurückgeführt wird, dass die fließfähige oder pastöse Masse ständig im Fluss gehalten wird. Von Vorteil ist der Rückführungskanal hierbei unmittelbar an die Steuereinrichtung angeschlossen. Auf diese Weise gelingt es, die Viskosität bzw. die tixotropischen Eigenschaften der fließfähigen oder pastösen Masse auch zwischen den Arbeitstakten oder in Wartestellungen konstant zu halten, und dadurch Qualitätsschwankungen der auf das Werkstück aufbringenden Masse zu vermeiden.

Die Erfindung eignet sich nicht nur für Klebeverfahren, sondern auch anderen Verfahren, bei denen eine fließfahige oder pastöse Masse auf ein Werkstück aufgetragen wird, insbesondere für Lackierverfahren oder PVC-Applikationen in der Autokarosseriefertigung.

Dem Prinzip der Erfindung folgend besitzt die Steuereinrichtung wenigstens zwei unterschiedliche Betriebsstellungen, nämlich eine erste Stellung, die Applikationsstellung, bei der der Volumenstrom der vom Materialversorgungsspeicher zur Applikationseinrichtung geförderten Masse geregelt wird, und eine zweite Stellung, die Zirkulationsstellung, bei der die fließfähige oder pastöse Masse wenigstens teilweise zum Materialversorgungsspeicher zurücktransportiert wird.

Bei einer vorteilhaften Weiterführung der Erfindung besitzt die Steuereinrichtung eine dritte Betriebsstellung, nämlich eine Druckentlastungsstellung, bei der der zwischen den Applikationsarten entstehende Druckgradient abgebaut wird.

Bei einer bevorzugten Weiterbildung des erfindungsgemäßen Verfahrens ist vorgesehen, dass die Steuerung des Volumenstromes der fließfähigen oder pastösen Masse zur Applikationseinrichtung durch eine variable Querschnittsveränderung im Zuführungskanal bzw. in der Steuereinrichtung erfolgt.

Die erfindungsgemäße Vorrichtung zum Aufbringen einer fließfähigen oder pastösen Masse auf ein Werkstück zeichnet sich dadurch aus, dass ein Rückführungskanal vorgesehen ist, über den die an die Applikationseinrichtung zugeführte fließfähige oder pastöse Masse an den Materialversorgungsspeicher dergestalt zurückführbar ist, dass die fließfähige oder pastöse Masse ständig im Fluss gehalten wird. Hierbei ist der Rückführungskanal unmittelbar an die Steuereinrichtung angeschlossen.

Bei einer bevorzugten Ausführung der erfindungsgemäßen Vorrichtung weist die Steuereinrichtung ein in einem Gehäuse gelagertes und motorisch oder hydraulisch um eine Drehachse drehbar angetriebenes Absperrorgan auf, welches annähernd T-förmig ausgebildete bzw, angeordnete Durchlässe besitzt, die in Abhängigkeit der Winkelstellung des Absperrorgans die Weite der Querschnittsöffnungen von Zuführungskanal bzw. Rückführungskanal und dadurch den Massenvolumenstrom steuern.

Bei einer weiteren Ausführung der Erfindung kann die Applikationseinrichtung mehrere unterschiedliche, über Ventile an die Steuereinrichtung angeschlossene Sprühköpfe aufweisen.

Im Folgenden wird die Erfindung anhand der Zeichnung näher erläutert. Es zeigt:

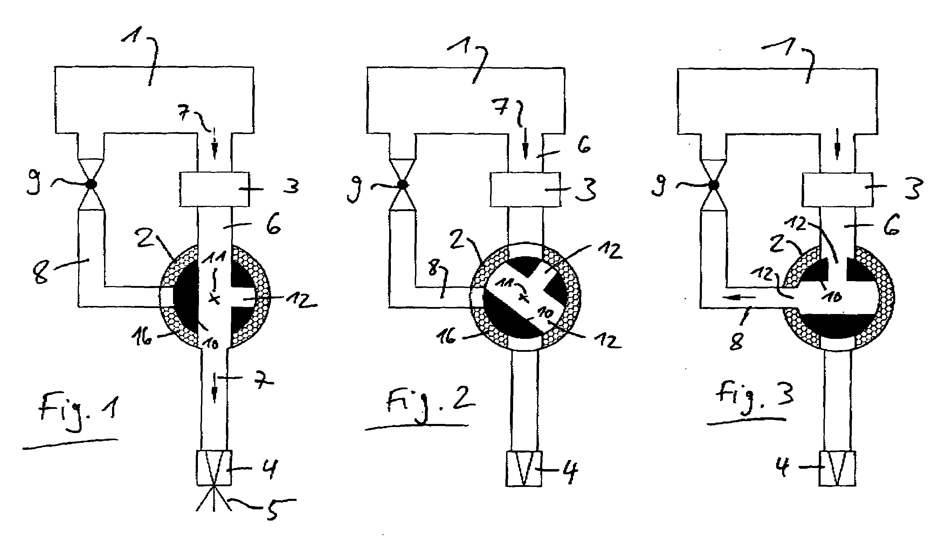

- Fig. 1 bis 6: schematische Schnittansichten der erfindungs gemäßen Vorrichtung in unterschiedlichen Betriebsstellungen.

Die in den Fig. 1 bis 6 dargestellten bevorzugten Ausführungsbeispiele der Erfindung umfassen einen Vorratsbehälter 1 für die pastöse Masse, eine Steuereinrichtung 2, an welche die pastöse Masse aus dem Vorratsbehälter 1 über eine Fördereinrichtung 3 transportiert wird, und eine Applikationseinrichtung mit einem mit dem Ausgang der Steuereinrichtung 2 verbundenen Applikationskopf 4, mit welchem die pastöse Masse 5 auf ein (nicht näher dargestelltes) Werkstück aufgetragen wird. Vom Vorratsbehälter 1 führt ein Zuführungskanal 6 an die Steuereinrichtung 2, durch welchen die pastöse Masse gemäß Pfeile 7 an den Applikationskopf 4 bei geöffneter Steuereinrichtung 2 strömt bzw. transportiert wird. Erfindungsgemäß ist darüber hinaus ein Rückführungskanal 8 vorgesehen, über den die an die Applikationseinrichtung 4 zugeführte fließfähige oder pastöse Masse 5 an den Materialversorgungsspeicher 1 dergestalt zurückführbar ist, dass die fließfähige oder pastöse Masse ständig im Fluss gehalten wird. Der Rückführungskanal 8 ist hierbei unmittelbar an die Steuereinrichtung 2 angeschlossen, und über ein Ventil 9 absperrbar.

Für die Erfindung unmittelbar nicht wesentlich, aber zum näheren Verständnis wird erwähnt, dass die Fördereinrichtung 3 wenigstens eine Förderpumpe für den Transport der aufzutragenden Masse umfasst, und darüber hinaus ein oder mehrere Mittel zur Messung des Volumenstromes bzw. des hydrostatischen Druckes des durch den Kanal 6 strömenden Mediums, sowie ein Mittel zur Messung der Temperatur des Mediums aufweisen kann; der gemessene Volumenstrom bzw. der gemessene Druck und/oder die gemessene Temperatur des Mediums können in einer der Steuereinrichtung zugeordneten (nicht dargestellten) Steuerschaltung ausgewertet werden und zur Regelung z. B. des Fördervolumens bzw. des Förderstromes herangezogen werden.

Ebenso können plötzliche Druckschwankungen, z. B. aufgrund von Pumpenschlägen oder dergleichen erfasst werden.

Bei den in den Fig. 1 bis 6 dargestellten Ausführungsbeispielen weist die Steuereinrichtung 2 ein in einem Gehäuse 16 gelagertes und motorisch oder hydraulisch um eine Drehachse 11 drehbar angetriebenes Absperrorgan 10 auf, welches annähernd T-förmig ausgebildete bzw, angeordnete Durchlässe 12 besitzt, die in Abhängigkeit der Winkelstellung des Absperrorgans 10 die Weite der Querschnittsöffnungen von Zuführungskanal 6 bzw. Rückführungskanal 8 und dadurch den Hassenvolumenstrom steuern.

In den Fig. 1 bis 6 sind unterschiedliche ßetriebsstellungen der Steuereinrichtung 2 dargestellt.

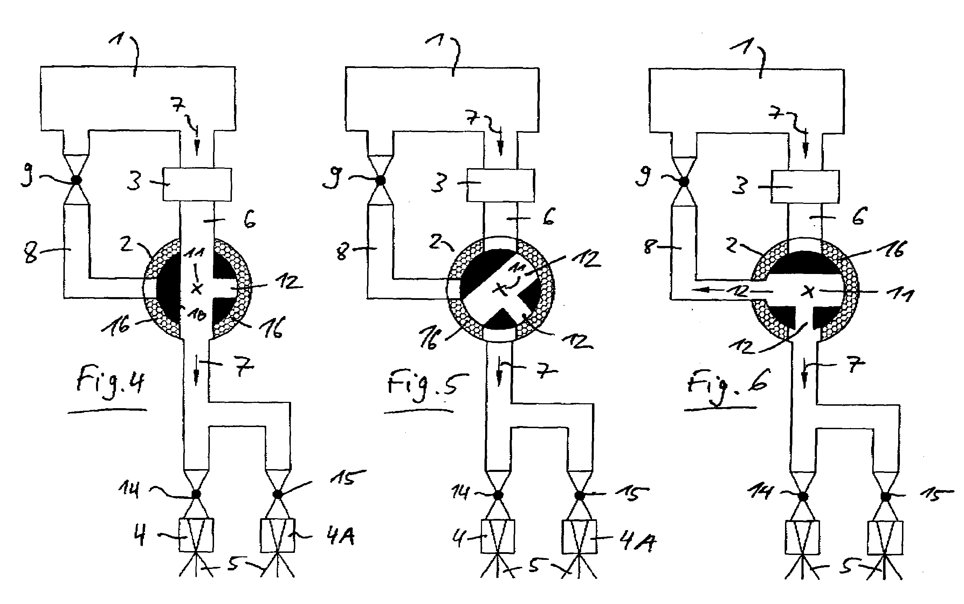

Nach den Fig. 1 und 4 (Fig. 4 ist identisch zu Fig. 1) ist eine erste Betriebsstellung, die Applikationsstellung, bei der der Volumenstrom der vom Materialversorgungsspeicher 1 zur Applikationseinrichtung 4 geförderte Masse 5 geregelt wird, nach der Fig. 3 eine zweite Betriebsstellung, die Zirkulationsstellung, bei der die fließfähige oder pastöse Masse vollständig zum Materialversorgungsspeicher 1. zurück transportiert wird.

Die in den Fig. 2 und 5 dargestellte Zwischenstellang, die Nullstellung, die bei Pausen oder anderen Betriebsunterbrechungen eingestellt wird, verhindert einen Austritt, von Material.

Fig. 6 zeigt eine dritte Betriebsstellung der Steuereinrichtung 2, nämlich eine Druckentlastungsstellung, bei der der zwischen den unterschiedlichen Betriebsstellungen bzw. verschiedenen Applikationsarten entstehende Druckgradient abgebaut werden kann, damit an den Nahtanfängen keine unerwünschten Materialanhäufungen entstehen.

Während bei den Ausführungsbeispielen gemäß Fig. 1 bis 3 die Applikationseinrichtung nur mit einem Applikationskopf 4 dargestellt ist, sind bei den Ausführungsbeispielen gemäß Fig. 4 bis 6 zwei unterschiedliche, über Ventile 14, 15 an die Steuereinrichtung 2 angeschlossene Applikationsköpfe 4, 4A vorgesehen. So kann beispielsweise bei der Applikationsart Flatstream ("Flachstcahl") mit einem Druck von ca. 100 bar und der Applikationsart Airless (d.h. "ohne Luftzerstäubung") mit einem Druck von ca. 200 bar ein Applikationswechsel ohne die erwähnten unerwünschten Materialanhäufungen erfolgen.

## Patentansprüche

1. Verfahren zum Aufbringen einer fließfähigen oder pastösen Masse auf ein Werkstück, bei welchem die fließfähige oder pastöse Masse (5) aus einem Materialversorgungsspeicher (1) kommend über eine an eine den Volumenstrom der Masse steuernde Steuereinrichtung (2) gehenden Zuführungskanal (6) an eine Applikationseinrichtung (4) zugeführt wird, mit welcher die Masse auf das Werkstück aufgetragen wird,
**dadurch gekennzeichnet, dass**
die an die Applikationseinrichtung (4) zugeführte fließfähige oder pastöse Masse (5) über einen Rückführungskanal (8) an den Materialversorgungsspeicher (1) dergestalt zurückgeführt wird, dass die fließfähige oder pastöse Masse (5) ständig im Fluss gehalten wird.

2. Verfahren nach Anspruch 1, **dadurch gekennzeichnet, dass** der Rückführungskanal (8) an die Steuereinrichtung (2) angeschlossen ist.

3. Verfahren nach Anspruch 1 oder 2, **dadurch gekennzeichnet, dass** die Steuereinrichtung (2) wenigstens zwei unterschiedliche Betriebsstellungen besitzt, nämlich eine erste Stellung, die Applikationsstellung, bei der der Volumenstrom der vom Materialversorgungsspeicher (1) zur Applikationseinrichtung (4) geförderten Masse geregelt wird, und eine zweite Stellung, die Zirkulationsstellung, bei der die fließfähige oder pastöse Masse (5) wenigstens teilweise zum Materialversorgungsspeicher (1) zurücktransportiert wird.

4. Verfahren nach einem der vorherigen Ansprüche, **dadurch gekennzeichnet, dass** die Steuereinrichtung (2) eine dritte Betriebsstellung besitzt, nämlich eine Druckentlastungsstellung, bei der der zwischen den Applikationsarten entstehende Druckgradient abgebaut wird.

5. Verfahren nach einem der vorherigen Ansprüche, **dadurch gekennzeichnet, dass** die Steuerung des Volumenstromes der fließfähigen oder pastösen Masse (5) zur Applikationseinrichtung (4) durch eine variable Querschnittsveränderung im Zuführungskanal (6) bzw. in der Steuereinrichtung (2) erfolgt.

6. Vorrichtung zum Aufbringen einer fließfähigen oder pastösen Masse auf ein Werkstück, bei welchem die fließfähige oder pastöse Masse (5) aus einem Materialversorgungsspeicher (1) kommend über eine an eine den Volumenstrom der Masse steuernde Steuereinrichtung (2) gehenden Zuführungskanal (6) an eine Applikationseinrichtung (4) zugeführt wird, mit welcher die Masse auf das Werkstück aufgetragen wird,
**dadurch gekennzeichnet, dass**
ein Rückführungskanal (8) vorgesehen ist, über den die an die Applikationseinrichtung (4) zugeführte fließfähige oder pastöse Masse (5) an den Materialversorgungsspeicher (1) dergestalt zurückführbar ist, dass die fließfähige oder pastöse Masse (5) ständig im Fluss gehalten wird.

7. Vorrichtung nach Anspruch 6, **dadurch gekennzeichnet, dass** der Rückführungskanal (8) an die Steuereinrichtung (2) angeschlossen ist.

8. Vorrichtung nach Anspruch 6 oder 7, **dadurch gekennzeichnet, dass** die Steuereinrichtung (2) wenigstens zwei unterschiedliche Betriebsstellungen besitzt, nämlich eine erste Stellung, die Applikationsstellung, bei der der Volumenstrom der vom Materialversorgungsspeicher (1) zur Applikationseinrichtung (4) geförderte Masse geregelt wird, und eine zweite Stellung, die Zirkulationsstellung, bei der die fließfähige oder pastöse Masse wenigstens teilweise zum Materialversorgungsspeicher (1) zurücktransportiert wird.

9. Vorrichtung nach einem der vorhergehenden Ansprüche, **dadurch gekennzeichnet, dass** die Steuereinrichtung (2) eine dritte Betriebsstellung besitzt, nämlich eine Druckentlastungsstellung, bei der der zwischen den Applikationsarten entstehende Druckgradient abgebaut wird.

10. Vorrichtung nach einem der vorhergehenden Ansprüche, **dadurch gekennzeichnet, dass** die Steuerung des Volumenstroms der fließfähigen oder pastösen Masse (5) zur Applikationseinrichtung (4) durch eine Querschnittsveränderung im Zuführungskanal (6) bzw. in der Steuerungseinrichtung (2) erfolgt.

11. Vorrichtung nach einem der vorhergehenden Ansprüche, **dadurch gekennzeichnet, dass** die Steuereinrichtung (2) ein in einem Gehäuse (16) gelagertes und motorisch oder hydraulisch um eine Drehachse (11) drehbar angetriebenes Absperrorgan (10) aufweist, welches annähernd T-förmig ausgebildete bzw. angeordnete Durchlässe (12) besitzt, die in Abhängigkeit der Winkelstellung des Absperrorgans (10) die Weite der Querschnittsöffnungen von Zuführungskanal (6) bzw. Rückführungskanal, (8) und **dadurch** den Massenvolumenstrom steuern.

12. Vorrichtung nach einem der vorhergehenden Ansprüche, **dadurch gekennzeichnet, dass** die Applikationseinrichtung (4) mehrere unterschiedliche, über Ventile (14, 15) an die Steuereinrichtung (2) angeschlossene Sprühköpfe (4, 4A) aufweist.
